# EUROPÄISCHE PATENTSCHRIFT

(11) **EP 1 375 275 B1**
(45) Veröffentlichungstag und Bekanntmachung des Hinweises auf die Patenterteilung: **06.05.2009**
(21) Anmeldenummer: 03002703.1
(22) Anmeldetag: 06.02.2003
(51) Int. Cl.: B60S 1/38, B60S 1/16

(54) **Getriebe-Antriebseinheit mit Rastelement**
Transmission drive unit with a rest element
Unité d'entraînement avec un élément d' arrêt

(30) Priorität: 22.06.2002 DE 10227996
(43) Veröffentlichungstag der Anmeldung: 02.01.2004
(73) Patentinhaber: ROBERT BOSCH GMBH, 70442 Stuttgart (DE)
(72) Erfinder: Oberle, Hans-Juergen, 76437 Rastatt (DE); Stock, Andreas, 76185 Karlsruhe (DE); Schwendemann, Franz, 77833 Ottersweier (DE); Boldt, Markus, 77866 Memprechtshofen (DE)

(56) Entgegenhaltungen:
- EP-A- 0 856 454
- EP-A- 1 484 830
- WO-A-96/29213
- DE-A1- 19 755 899
- US-A- 6 152 646

## Beschreibung

### Stand der Technik

Die Erfindung betrifft eine Getriebe-Antriebseinheit, an der ein Rastelement angeordnet ist, nach der Gattung des unabhängigen Anspruchs.

Mit der DE 197 27 118 A1 ist eine elektrische Antriebseinheit bekannt geworden, bei der ein im wesentlichen topfförmiges Getriebegehäuse zur Aufnahme von Getriebeelementen an einem Polgehäuse befestigt ist und durch einen Getriebedeckel verschließbar ist. Dabei wird beispielsweise der Getriebedeckel durch Rastelemente am Getriebegehäuse befestigt.

Mit der EP-A-148 4830 ist ein Fensterhebermotor bekannt geworden, bei dem zwei Gehäuseteile derart miteinander verbunden werden, dass der Motor an einem Karosserieteil fixiert wird. Dabei weist das eine Gehäuseteil Rastelemente auf, die durch eine Bohrung des Karosserieteils greifen und gegen einen Anschlag des zweiten Gehäuseteils bewegbar sind.

Die DE-A-197 558 99 offenbart eine Antriebseinheit, die ebenfalls durch das Zusammenfügen zweier Gehäuseteile an einem Karosserieteil befestigt wird. Die am ersten Gehäuseteil angeformten Rastelemente greifen dabei durch eine Öffnung des Karosserieteils und liegen einerseits am Karosserieteil und auf der gegenüberliegenden Seite am zweiten Gehäuseteil an.

Mit der US-A-615 26 46 ist eine Befestigungsvorrichtung für eine Antriebseinheit bekannt geworden, bei der an einem Befestigungsdom ein elastischer Fortsatz angeformt ist. Zwischen dem axialen Fortsatz und dem Dom ist ein Freiraum ausgespart, wobei der axiale Fortsatz in komplett montiertem Zustand auf der gegenüberliegenden Seite an einer Anschlagsfläche eines weiteren Gehäuseteils anliegt.

Des weiteren ist bekannt, elektrische Antriebseinheiten mittels Rastelementen beispielsweise zur Vormontage an Sitzteilen eines Kraftfahrzeugs zu fixieren, bevor diese dann bei der endgültigen Montage mit dauerhaften Verbindungsmitteln befestigt werden. Da die Antriebseinheiten oft von Hand ohne direkten Sichtkontakt blind an einem Sitzteil eingerastet werden, kann es vorkommen, dass die Antriebseinheit verkantet oder falsch aufgesetzt wird, wodurch das Rastelement unsachgemäß ausgelenkt wird und abbricht. Außerdem besteht die Gefahr, dass das Rastelement beim Transport der Getriebe-Antriebseinheit schon vor deren Montage beschädigt wird oder abbricht.

### Vorteile der Erfindung

Die erfindungsgemäße Vorrichtung mit den Merkmalen des Anspruchs 1 hat demgegenüber den Vorteil, dass das Rastelement sowohl beim Transport der Getriebe-Antriebseinheit als auch bei deren Montage an eine Verstellvorrichtung gegenüber einem Abbrechen des Rastelements wirksam geschützt ist. Dies geschieht durch die Anordnung von zwei Anschlägen, die ein übermäßiges Auslenken des Rastelements bei unsachgemäßer Behandlung der Getriebe-Antriebseinheit sowohl in der Soll-Auslenkungsrichtung bei der Montage, als auch entgegen der Soll-Auslenkungsrichtung verhindern.

Durch die in den Unteransprüchen angegebenen Maßnahmen sind vorteilhafte Weiterbildung der Vorrichtung nach dem Hauptanspruch möglich. So wird das Rastelement günstiger Weise als Rasthaken ausgeführt, der in eine Aussparung eines Biegestanzteils gesteckt wird, und mit einem Hinterschnitt an einer Kante der Aussparung im Blech verrastet. Die Form der Aussparung kann durch das Stanzwerkzeug sehr einfach an die Geometrie des Rasthakens angepasst werden.

Das Rastelement kann besonders einfach mittels Spritzgussverfahren einstückig mit einem Gehäuseteil der Getriebe-Antriebseinheit gefertigt werden, da bei den meisten Anwendungen das Gehäuse aus Kunststoff gespritzt wird.

Ist das Rastelement mit einem kreisringförmigen Querschnitt senkrecht zur Montagerichtung ausgebildet, weist ein solches Ringsegment eine höhere mechanische Stabilität auf und kann sich entsprechend dem Ringsegment gegenüber mehreren Richtungen der Verstelleinheit abstützen.

Die Abstände zwischen den Anschlägen und dem Rastelement werden so gewählt, dass das Rastelement genügend Bewegungsfreiraum für den Montagevorgang besitzt, andererseits das Rastelement aber an den Anschlägen anliegt, bevor Gefahr besteht, dass es abbricht.

Die Anschläge sind günstiger Weise ebenso wie das Rastelement in einem Stück mit dem Gehäuse der Getriebe-Antriebseinheit, vorzugsweise im Kunststoffspritzgussverfahren gefertigt. Dadurch wird die Anzahl der Bauteile reduziert und zusätzliche Montageschritte vermieden.

Sind die Anschläge derart angeordnet, dass sie das Rastelement senkrecht zur Montagerichtung teilweise oder vollständig umschließen, ist das Rastelement gegen eine übermäßige Auslenkung in alle Richtungen senkrecht zur Montagerichtung wirksam geschützt, wodurch ein Abbrechen desselben verhindert wird. Außerdem weisen solche um das Rastelement geschlossene Anschläge eine höhere mechanische Stabilität auf, bzw. können mit geringerem Materialaufwand hergestellt werden.

Weist das Gehäuseteil in Montagerichtung einen Fortsatz auf, der in eine korrespondierende Öffnung in der Verstelleinheit eingefügt wird, wird die Getriebe-Antriebseinheit durch eine solche Passung zusammen mit dem in die Verstelleinheit eingreifenden Rastelement räumlich exakt fixiert.

Wird das Rastmittel zur Vormontage einer Antriebseinheit an einer Verstelleinheit verwendet, ist es von Vorteil, wenn im Bereich des Rastelements oder des Passstifts, beispielsweise an einem am Gehäuseteil ausgeformten Dom, eine Aufnahme für ein Verbindungsmittel ausgeformt ist, mit dem die Antriebseinheit für die endgültige Montage fixiert wird. Dadurch ist eine exakte Übereinstimmung der Vormontageposition mit der endgültigen Montageposition gewährleistet.

Besonders günstig ist es, wenn durch die Positionierung der Getriebe-Antriebseinheit durch das Rastelement bei dessen Verrasten direkt eine formschlüssige Verbindung des Antriebstangs zwischen der Getriebe-Antriebseinheit und der Verstelleinheit hergestellt wird , um ein bewegliches Teil zu verstellen. Dabei kämmt eine profilierte Hohlwelle der Getriebe-Antriebseinheit mit einer profilierten Welle der Verstelleinheit oder umgekehrt.

### Zeichnung

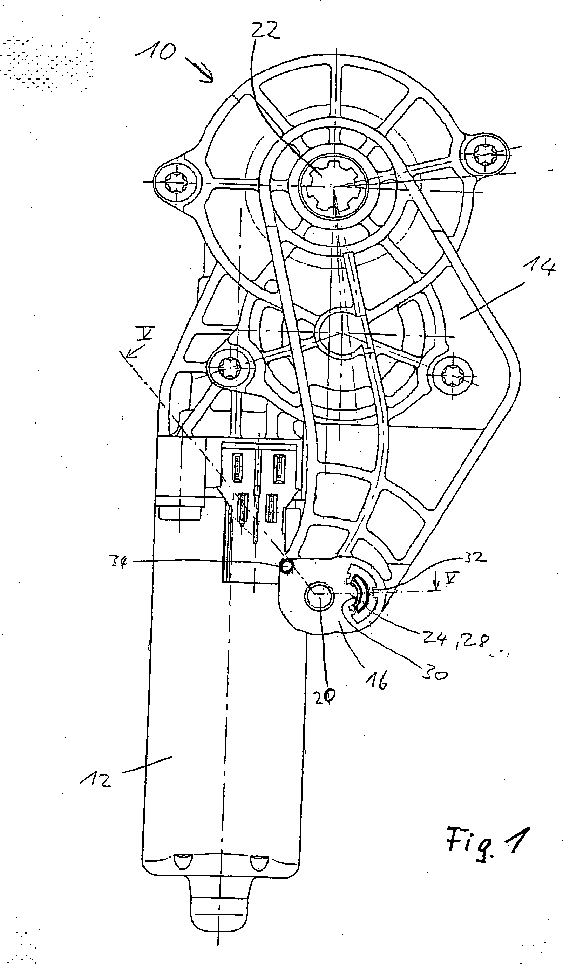

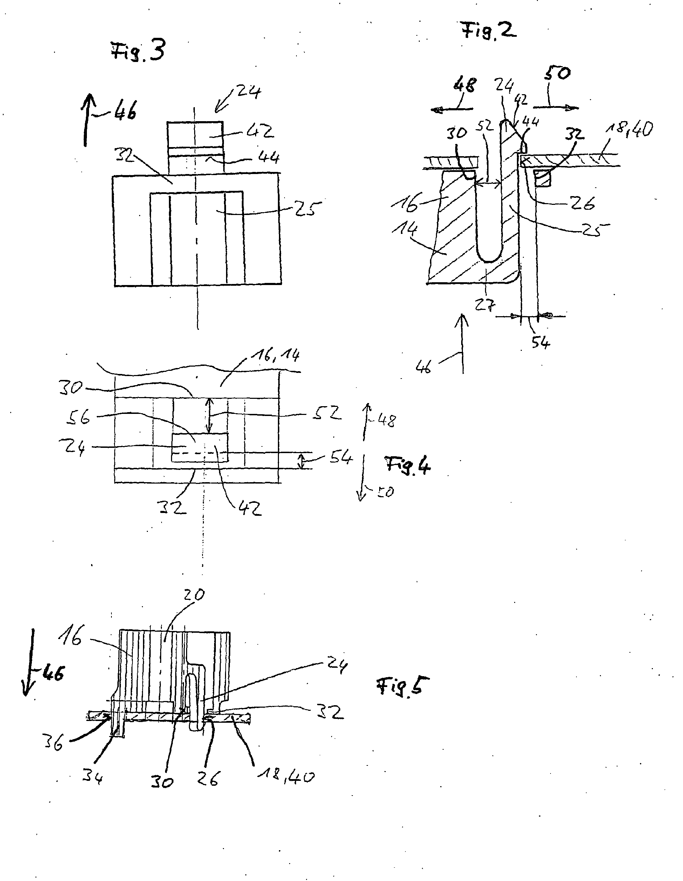

In der Zeichnung sind Ausführungsbeispiele einer erfindungsgemäßen Vorrichtung dargestellt und in den nachfolgenden Beschreibung näher erläutert. Es zeigen Figur 1 eine erfindungsgemäße Getriebe-Antriebseinheit, Figur 2 den Schnitt durch ein Rastelement eines weiteren Ausführungsbeispiels, Figur 3 eine Seitenansicht gemäß Figur 2, Figur 4 eine Draufsicht auf das Rastelement 24 aus Figur 3 und Figur 5 einen Schnitt nach der Linie V-V in Figur 1.

### Beschreibung der Ausführungsbeispiele

Das in Figur 1 dargestellte Ausführungsbeispiel zeigt eine erfindungsgemäße Getriebe-Antriebseinheit 10 mit einer Motor 12 und einem Getriebegehäuse 14, das als Kunststoff-Spritzgussteil hergestellt ist. Das Gehäuse 14 weist einen Dom 16 auf, in den zur Befestigung der Getriebe-Antriebseinheit 10 an einer Verstelleinheit 18 eine Aufnahme 20 für ein Verbindungsmittel, beispielsweise einer Schraube ausgeformt ist. Die Antriebseinheit 10 weist ein Abtriebsrad 22 mit einer profilierten Hohlwelle auf, in die im montiertem Zustand eine entsprechend profilierte Welle der Verstelleinheit 18 greift. Zur Vormontage ist an Dom 16 einstückig ein Rastelement 24 angeformt, das in ein entsprechendes Aufnahmeelement 26 der Verstelleinheit 18 greift. Das Rastelement 24 ist als ringsegmentförmiger Rasthaken 28 ausgebildet, der komplett von den beiden Anschlägen 30 und 32 umschlossen ist. Zur exakten Positionierung der Getriebe-Antriebseinheit 10 ist am Dom weiterhin ein Stift 34 als Fortsatz in Montagerichtung ausgebildet, der in eine korrespondierende Ausformung 36 der Verstelleinheit 18 eingefügt wird.

Ein Schnitt durch den Dom 16 gemäß der Linie V-V ist in Figur 5 dargestellt, wobei diese auch ein Biegestanzteil 40 einer Verstelleinheit 18 zeigt, auf das die Antriebseinheit 10 befestigt wird. Der Stift 34 greift hierbei in einer Art Passung in die Ausformung 36, die zusammen mit dem in dem Aufnahmeelement 26 verrasteten Rastelement 24 die Getriebe-Antriebseinheit 10 exakt auf der Verstelleinheit 18 fixiert. Nach der Vormontage wird in die Aufnahme 20 ein Verbindungsmittel eingefügt, das die Antriebseinheit 10 fest mit dem Biegestanzteil 40 verbindet, beispielweise Schrauben oder Nieten. Die Bewegung des Rastelements 24 senkrecht zur Montagerichtung ist durch die Anschläge 30 und 32 beschränkt, wie dies auch im Schnitt durch den Rasthaken 24 schematisch in Figur 2 dargestellt ist. Das als Rasthaken ausgebildete Rastelement 24 weist einen Hinterschnitt 44 auf, mit dem dieser im Aufnahmeelement 26 der Verstelleinheit 18 verrastet. Das Aufnahmeelement 26 ist in diesem Ausführungsbeispiel als gestanztes Loch im Biegestanzteil 40 ausgeführt. Das Rastelement 24 weist eine bewegliche Zunge 25 auf, die über einen Steg 27 mit dem Dom 16 des Gehäuses 14 verbunden ist. Wird nun die Antriebseinheit 10 in Montagerichtung 46 in das Aufnahmeelement 26 eingeführt, wird der Rasthaken 24 aufgrund einer an dessen Spitze angeformten schrägen Fläche 42 in Auslenkrichtung 48 (senkrecht zur Montagerichtung 46) ausgelenkt, bis das Rastelement 24 in der Montageposition einrastet. Die bewegliche Zunge 25 kann maximal um den Abstand 52 (maximale Auslenkung) in Auslenkrichtung 48 ausgelenkt werden, weil sie dann am Anschlag 30 anliegt. Andererseits ist die Bewegung der beweglichen Zunge 25 in Gegenrichtung 50 entgegen der Auslenkrichtung 48 auf die maximale Auslenkung 54 beschränkt, da beispielsweise bei einer unsachgemäßen Handhabung des Rastelements 24 dieses am Anschlag 32 zum Anliegen kommt. Das Rastelement 24 ist durch die beiden Anschläge 30, 32 auch schon vor der Montage gegen eine Beschädigung - beispielsweise bei dessen Herstellung und Transport - geschützt. Umschließen die Anschläge 30, 32 das Rastelement 24 wie in Figur 1 und Figur 5 dargestellt, ist das Rastelement 24 nicht nur in Auslenkrichtung 48 und in deren entgegen gesetzter Richtung 50 gegen eine übermäßige Auslenkung geschützt, sondern gegenüber alle Richtungen senkrecht zur Montagerichtung.

Figur 3 zeigt eine Vorderansicht des Rastelements 24 aus Figur 2 in Auslenkrichtung 48, wobei der zweite Anschlag 32 zur Begrenzung der maximalen Auslenkung 54 in Gegenrichtung 50, in etwa parallel zum ersten Anschlag 30 für die Auslenkrichtung 48 angeordnet ist, wie auch in Figur 4 ersichtlich ist. Hierbei ist der Querschnitt der beweglichen Zunge 25 ein Rechteck, dessen längere Seiten etwa parallel zur Längsrichtung der beiden Anschlägen 30 und 32 ausgerichtet sind. Im Ausführungsbeispiel sind senkrecht zur Auslenk (48, 50) - und Montagerichtung 46 keine Anschläge angeordnet, da eine übermäßige Auslenkung des Rastelements 24 in diese Richtung durch die Geometrie des rechteckförmigen Querschnitts der beweglichen Zunge 25 verhindert wird.

Variationen der erfindungsgemäßen Antriebseinheit 10 mit Clipsverbindung können auch mehrere Rastelemente und/oder mehrere Passstifte zum Eingriff in eine Verstelleinheit aufweisen. Die Getriebe-Antriebseinheit 10 kann ebenso für die Betätigung eines Fensterhebers, eines Schiebedachs oder eines sonstigen motorisch beweglichen Teils in und außerhalb des Kraftfahrzeugs verwendet werden, wobei die Antriebseinheit 10 dann mittels der Schnappverbindung vorzugsweise auf einem Biegestanzteil 40 der entsprechenden Verstelleinheit befestigt wird. Die Ausführung des Rastelements 24 oder der Anschläge 30, 32 ist nicht auf ein Spritzguss-Teil beschränkt, sie können beispielsweise auch aus Metall gefertigt und in einem separaten Arbeitsgang an das Gehäuse 14 der Getriebe-Antriebseinheit 10 befestigt werden. Auch kann die konkrete Ausgestaltung des Rastelements 24 für verschiedene Anwendungen variieren. Es soll der Querschnitt der beweglichen Zunge 25 nicht auf ein Kreisringsegment oder auf ein Rechteck beschränkt sein, sondern kann beispielsweise ebenso kreisförmig oder quadratisch ausgebildet sein oder jeden beliebigen anderen Querschnitt annehmen. Ebenso kann die Ausformung des Hinterschnitts 44 und der schrägen Fläche 42 die auftretenden Kräfte bei der Montage angepasst werden. Prinzipiell ist auch eine Umkehrung möglich, dass das Rastelement 24 mit dem Hinterschnitt 44 an der Verstelleinheit 18 angeordnet ist, und die Getriebe-Antriebseinheit 10 ein entsprechendes Aufnahmeelement 26 aufweist. Der Hinterschnitt 44 (Haken) und die bewegliche Zunge 25 müssen auch nicht am gleichen Bauteil angeformt sein, sondern können sich beliebig auf das Rastelement 24 oder auf das Aufnahmeelement 26 aufteilen.

## Patentansprüche

1. Getriebe-Antriebseinheit (10), insbesondere zum Verstellen von beweglichen Teilen im Kraftfahrzeug, mit mindestens einem Gehäuseteil (14), an dem mindestens ein Rastelement (24) angeordnet ist, das mit einem Aufnahmeelement (26) einer Verstelleinheit (18) wechselwirken kann, und die maximalen Auslenkungen (52, 54) des Rastelements (24) in Auslenkrichtung (48) durch einen ersten Anschlag (30) und in Gegenrichtung (50) durch einen zweiten Anschlag (32) begrenzt ist, **dadurch gekennzeichnet, dass** die beiden Anschläge (30, 32) einteilig mit dem Gehäuseteil (14) ausgebildet sind, wobei die maximalen Auslenkungen (52, 54) zwischen dem Rastelement (24) und den beiden Anschlägen (30, 32) derart bemessen sind, dass das Rastelement (24) beim Berühren der Anschläge (30, 32) nicht über seine zulässige Dehnung beansprucht ist.

2. Getriebe-Antriebseinheit (10) nach Anspruch 1, **dadurch gekennzeichnet, dass** das mindestens eine Rastelement (24) mit einem Hinterschnitt (44) als Rasthaken (24) ausgebildet ist, der in ein Loch (26) in der Verstelleinheit (18) greifen kann.

3. Getriebe-Antriebseinheit (10) nach einem der Ansprüche 1 oder 2, **dadurch gekennzeichnet, dass** das Rastelement (24) einteilig mit dem Gehäuseteil (14), insbesondere als Spritzguß-Teil, ausgebildet ist.

4. Getriebe-Antriebseinheit (10) nach einem der Ansprüche 1 bis 3, **dadurch gekennzeichnet, dass** das Rastelement (24) einen kreisringfömigen Querschnitt (28) aufweist.

5. Getriebe-Antriebseinheit (10) nach einem der Ansprüche 1 bis 4, **dadurch gekennzeichnet, dass** die Anschläge (30, 32) das Rastelement (24) bezüglich aller Richtungen senkrecht zur Montagerichtung umschließen.

6. Getriebe-Antriebseinheit (10) nach einem der Ansprüche 1 bis 5, **dadurch gekennzeichnet, dass** die beiden Anschläge (30, 32) mit dem Gehäuseteil (14) als Spritzguß-Teil, ausgebildet sind.

7. Getriebe-Antriebseinheit (10) nach einem der Ansprüche 1 bis 4, **dadurch gekennzeichnet, dass** die beiden Anschläge (30, 32) das Rastelement (24) zumindest näherungsweise umschließen.

8. Getriebe-Antriebseinheit (10) nach einem der Ansprüche bis 7, mit einer Verstelleinheit (18), an der die Getriebe-Antriebseinheit befestigt ist, **dadurch gekennzeichnet, dass** an dem mindestens einen Gehäuseteil (14) mindestens ein Stift (34) angeordnet ist, der in eine Ausformung (36) der Verstelleinheit (18) greifen kann, um zusammen mit dem Rastelement (24) die Getriebe-Antriebseinheit (10) auf der Verstelleinheit (18) räumlich zu fixieren.

9. Getriebe-Antriebseinheit (10) nach einem der Ansprüche 1 bis 8, **dadurch gekennzeichnet, dass** in unmittelbarer Nähe zum Rastelement (24) und/oder dem Stift (34) mindestens eine Aufnahme (20) für weitere Verbindungsmittel - insbesondere Schrauben - vorgesehen ist, die die Getriebe-Antriebseinheit (10) dauerhaft mit der Verstelleinheit (18) verbinden.

10. Getriebe-Antriebseinheit (10) nach einem der Ansprüche 1 bis 9, **dadurch gekennzeichnet, dass** die Getriebe-Antriebseinheit (10) ein Abtriebselement (22) aufweist, in das bei eingerastetem Rastelement (24) drehfest ein Antriebselement der Verstelleinheit (18) greift.

## Claims

1. Gearing/drive unit (10), in particular for adjusting movable parts in a motor vehicle, having at least one housing part (14) on which at least one latching element (24) is arranged, which latching element (24) can interact with a receptacle element (26) of an adjusting unit (18), and the maximum deflections (52, 54) of the latching element (24) are limited in a deflecting direction (48) by a first stop (30) and in the opposite direction (50) by a second stop (32), **characterized in that** the two stops (30, 32) are formed in one piece with the housing part (14), wherein the maximum deflections (52, 54) between the latching element (24) and the two stops (30, 32) are dimensioned such that the latching element (24) is not loaded beyond its permissible strain when it comes into contact with the stops (30, 32).

2. Gearing/drive unit (10) according to Claim 1, **characterized in that** the at least one latching element (24) is formed with an undercut (44) as a latching hook (24) which can engage into a hole (26) in the adjusting unit (18).

3. Gearing/drive unit (10) according to one of Claims 1 or 2, **characterized in that** the latching element (24) is formed in one piece with the housing part (14), in particular as an injection-moulded part.

4. Gearing/drive unit (10) according to one of Claims 1 to 3, **characterized in that** the latching element (24) has a circular cross section (28).

5. Gearing/drive unit (10) according to one of Claims 1 to 4, **characterized in that** the stops (30, 32) surround the latching element (24) perpendicularly with respect to the mounting direction in relation to all directions.

6. Gearing/drive unit (10) according to one of Claims 1 to 5, **characterized in that** the two stops (30, 32) are formed as an injection-moulded part with the housing part (14).

7. Gearing/drive unit (10) according to one of Claims 1 to 4, **characterized in that** the two stops (30, 32) at least approximately surround the latching element (24).

8. Gearing/drive unit (10) according to one of Claims 1 to 7, having an adjusting unit (18) to which the gearing/drive unit is fastened, **characterized in that** at least one pin (34) is arranged on the at least one housing part (14), which pin (34) can engage into a moulding (36) of the adjusting unit (18) in order, together with the latching element (24), to fix the gearing/drive unit (10) on the adjusting unit (18).

9. Gearing/drive unit (10) according to one of Claims 1 to 8, **characterized in that** at least one receptacle (20) for further connecting means - in particular screws - is provided in the direct vicinity of the latching element (24) and/or of the pin (34), which further connecting means permanently connect the gearing/drive unit (10) to the adjusting unit (18).

10. Gearing/drive unit (10) according to one of Claims 1 to 9, **characterized in that** the gearing/drive unit (10) has a drive output element (22) into which a drive input element of the adjusting unit (18) engages in a rotationally fixed manner when the latching element (24) is latched.

## Revendications

1. Unité d'entraînement de transmission (10), en particulier pour le déplacement de pièces mobiles dans un véhicule automobile, comprenant au moins une partie de boîtier (14) sur laquelle est disposé au moins un élément d'arrêt (24) qui peut coopérer avec un élément de réception (26) d'une unité de réglage (18), les déviations maximales (52, 54) de l'élément d'arrêt (24) dans la direction de déviation (48) étant limitées par une première butée (30) et dans la direction opposée (50) par une deuxième butée (32), **caractérisée en ce que** les deux butées (30, 32) sont réalisées d'une seule pièce avec la partie de boîtier (14), les déviations maximales (52, 54) entre l'élément d'arrêt (24) et les deux butées (30, 32) étant dimensionnées de telle sorte que l'élément d'arrêt (24) ne soit pas sollicité au-delà de son extension admissible lors du contact avec les butées (30, 32).

2. Unité d'entraînement de transmission (10) selon la revendication 1, **caractérisée en ce que** l'au moins un élément d'arrêt (24) est réalisé avec une contre-dépouille (44) sous forme de crochet d'arrêt (24), qui peut venir en prise dans un trou (26) dans l'unité de réglage (18).

3. Unité d'entraînement de transmission (10) selon l'une quelconque des revendications 1 ou 2, **caractérisée en ce que** l'élément d'encliquetage (24) est réalisé d'une seule pièce avec la partie de boîtier (14), en particulier sous forme de pièce moulée par injection.

4. Unité d'entraînement de transmission (10) selon l'une quelconque des revendications 1 à 3, **caractérisée en ce que** l'élément d'arrêt (24) présente une section transversale (28) en forme de bague circulaire.

5. Unité d'entraînement de transmission (10) selon l'une quelconque des revendications 1 à 4, **caractérisée en ce que** les butées (30, 32) entoure l'élément d'arrêt (24), par rapport à toutes les directions, perpendiculairement à la direction de montage.

6. Unité d'entraînement de transmission (10) selon l'une quelconque des revendications 1 à 5, **caractérisée en ce que** les deux butées (30, 32) avec la partie de boîtier (14) sont réalisées sous forme de pièce moulée par injection.

7. Unité d'entraînement de transmission (10) selon l'une quelconque des revendications 1 à 4, **caractérisée en ce que** les deux butées (30, 32) entourent l'élément d'arrêt (24) au moins approximativement.

8. Unité d'entraînement de transmission (10) selon l'une quelconque des revendications 1 à 7, comprenant une unité de réglage (18), sur laquelle est fixée l'unité d'entraînement de transmission, **caractérisée en ce qu'**au moins une goupille (34) est disposée sur l'au moins une partie de boîtier (14), laquelle peut s'engager dans une formation (36) de l'unité de réglage (18), afin de fixer physiquement, conjointement avec l'élément d'arrêt (24), l'unité d'entraînement de transmission (10) sur l'unité de réglage (18).

9. Unité d'entraînement de transmission (10) selon l'une quelconque des revendications 1 à 8, **caractérisée en ce qu'**à proximité immédiate de l'élément d'arrêt (24) et/ou de la goupille (34) est prévu au moins un logement (20) pour d'autres moyens de connexion, notamment des vis, qui relient l'unité d'entraînement de transmission (10) de manière durable à l'unité de réglage (18).

10. Unité d'entraînement de transmission (10) selon l'une quelconque des revendications 1 à 9, **caractérisée en ce que** l'unité d'entraînement de transmission (10) présente un élément de sortie (22) dans lequel s'engage, de manière solidaire en rotation, un élément d'entraînement de l'unité de réglage (18) lorsque l'élément d'arrêt (24) est emboîté.
